# DEMANDE DE BREVET EUROPEEN

(11) **EP 1 038 568 A1**
(43) Date de publication de la demande: **27.09.2000**
(21) Numéro de dépôt: 00104662.2
(22) Date de dépôt: 03.03.2000
(51) Int. Cl.: B01D 46/52

(54) **Dispositif de filtration destiné notamment à l'épuration de l'air pour l'aération et/ou le chauffage et/ou la climatisation de locaux ou d'habitacles de véhicules automobiles**

(30) Priorité: 22.03.1999 FR 9903529
(71) Demandeur: VALEO, 75017 Paris (FR)
(72) Inventeur: Guérin, Richard, 61100 Ronfeugerai (FR); Jacq, Gérard, 61430 Athis de l'Orne (FR); Legrand, Claude, 14110 Condé sur Noireau (FR)
(74) Mandataire: Gamonal, Didier

(57) **Abrégé**

Dispositif de filtration destiné notamment à l'épuration de l'air pour l'aération et/ou le chauffage et/ou la climatisation de locaux ou d'habitacles de véhicules automobiles, comportant deux couches de non-tissé plissées : les fonds des plis d'une couche (11) sont disposés en regard d'au moins un fond défini par les plis de l'autre couche (12) en sorte que sont constitués des canaux (15) longitudinaux ; par exemple, les plis d'une même couche (11, 12) ont même hauteur et les plis des deux couches (11, 12) ont même pas et même hauteur ; des fibres ou une poudre, dites d'insertion, sont insérées dans les canaux (15) longitudinaux.

## Description

La présente invention concerne un dispositif de filtration destiné notamment à l'épuration de l'air pour l'aération et/ou le chauffage et/ou la climatisation de locaux ou d'habitacles de véhicules automobiles.

Un tel dispositif de filtration est généralement réalisé à partir d'un média filtrant constitué de différentes couches superposées de papier ou de non-tissé ; le plus souvent, ces couches sont plissées et empilées plis dans plis.

Un dispositif de filtration peut constituer un filtre à particules ou un filtre combiné capable d'arrêter à la fois des particules et des gaz délétères.

Pour un filtre à particules, l'une au moins desdites couches est un non-tissé réalisé à partir de micro-fibres ; pour un filtre combiné, l'une desdites couches est un lit de charbon actif.

Comme on peut le constater, dès le départ la réalisation de ces deux types de filtres est spécifique.

Par ailleurs, dans le premier cas, des filtres à particules, l'efficacité du filtre est liée à un traitement électrostatique des micro-fibres et, si celle-ci est bonne à l'état neuf, elle s'amenuise avec le temps. Dans le second cas, des filtres combinés, pour conserver une bonne répartition du lit du charbon actif, celui-ci est collé à la surface de la couche et, comme cela se comprend aisément, l'efficacité du filtre est limitée par la présence de la colle.

La présente invention a pour but de proposer un dispositif de filtration ne présentant pas ces inconvénients.

Selon l'invention, un dispositif de filtration destiné notamment à l'épuration de l'air pour l'aération et/ou le chauffage et/ou la climatisation de locaux ou d'habitacles de véhicules automobiles, comportant deux couches de non-tissé plissées, est caractérisé par le fait que les fonds des plis d'une couche sont disposés en regard d'au moins un fond défini par les plis de l'autre couche en sorte que sont constitués des canaux longitudinaux.

Ainsi, il suffira de remplir lesdits canaux longitudinaux de produits de filtrage appropriés pour obtenir soit un filtre à particules, soit un filtre combiné, sans que cela ne nécessite l'usage de colle ou de traitement particulier.

Les sommets des plis des couches sont très proches les uns des autres. Ils sont pratiquement en contact sans collage à ce niveau.

Le dispositif de filtration a ainsi une structure en nid d'abeille, les poussières étant piégées à la fois en surface mais également en profondeur. Ce dispositif est insensible aux conditions climatiques.

Selon une forme de réalisation, les plis d'une même couche ont même hauteur et les plis des deux couches ont même pas et même hauteur.

Selon une autre forme de réalisation, les plis d'une même couche ont même hauteur et les plis des deux couches ont même pas et des hauteurs différentes.

Selon une autre forme de réalisation, les plis d'une même couche ont même hauteur et les plis des deux couches ont des pas multiples l'un de l'autre et la hauteur des plis de l'une est la moitié de celle des plis de l'autre.

Selon une autre forme de réalisation, les plis d'une même couche ont même hauteur et les plis des deux couches ont des pas multiples l'un de l'autre et la hauteur des plis de l'une est inférieure à la moitié de celle des plis de l'autre.

Selon une autre forme de réalisation, les plis de la première couche sont constitués de rangées de plis imbriquées de hauteurs différentes, les plis de la seconde couche ont même hauteur, de préférence comprise entre les hauteurs des plis des rangées imbriquées de la première couche, et les plis des deux couches ont même pas.

Comme on le voit, l'invention permet de réaliser différentes formes de canaux longitudinaux et ainsi de modifier facilement la quantité de produits de filtration qui y sont insérés. En particulier, il est possible d'augmenter la quantité de ces produits sans augmenter la perte de charge. Les canaux ont une grande taille du fait que les fonds sont disposés en regard.

De préférence, la première couche de non-tissé et/ou la seconde couche de non-tissé est/sont formée(s) d'un voile de carde isotrope ou anisotrope comprenant des fibres de même nature ou un mélange de fibres différentes.

Avantageusement, le voile est en une seule couche.

De préférence, la longueur desdites fibres est au moins égale à 5 mm.

Avantageusement, la longueur desdites fibres est au plus égale à 120 mm.

De préférence, le diamètre moyen desdites fibres est au moins égal à 1 µm.

Avantageusement, les fibres sont choisies parmi le groupe des fibres thermoplastiques telles que les fibres de polypropylène, de polyéthylène, de polyester, de polycarbonate, de polyamide 6,6, le groupe des fibres acryliques, des fibres acryliques préoxydées, des fibres de carbone, le groupe des fibres para-aramide, le groupe des fibres méta-aramide, le groupe des fibres phénoliques, le groupe des fibres fluorocarbonées, le groupe des fibres minérales telles que les fibres de verre C,E,R,, le groupe des fibres métalliques, le groupe des fibres naturelles telles que végétales, animales, cellulosiques.

Il est possible à partir du sous-ensemble constitué par les deux couches de non tissé de réaliser soit un filtre à particules, soit un filtre combiné, c'est-à-dire arrêtant à la fois des particules et des gaz délétères.

Ainsi, pour réaliser un filtre à particules, des fibres dites d'insertion sont insérées dans les canaux longitudinaux.

De préférence, les fibres d'insertion sont choisies parmi le groupe des fibres thermoplastiques telles que les fibres de polypropylène, de polyéthylène, de polyester, de polycarbonate, de polyamide 6, de polyamide 6,6, le groupe des fibres acryliques, des fibres acryliques préoxydées, des fibres de carbone, le groupe des fibres para-aramide, le groupe des fibres méta-aramide, le groupe des fibres phénoliques, le groupe des fibres fluorocarbonées, le groupe des fibres minérales telles que les fibres de verre C,E,R,, le groupe des fibres métalliques, le groupe des fibres naturelles telles que végétales, animales, cellulosiques.

Pour réaliser un filtre combiné, une poudre (ou un mélange de poudres) dite(s) d'insertion est (sont) insérée(s) dans les canaux longitudinaux.

Avantageusement, les poudres d'insertion sont choisies parmi le groupe des thermoplastiques telles que les poudres de polypropylène, de polyéthylène, de polyester, de polycarbonate, de polyamide 6, de polyamide 6,6, d'acrylique, de modacrylique, de polyacrylique oxydé, d'aramide, de carbone, d'élastane, de phénol, de polyacrylate, de polyoxoamide, de polybenzimidazole, de polyether ethercétone, de polysulfure phénylène, de terre de diatomées, de silice, de zéolite, de métal, de charbon activé.

Dans tous les cas, l'efficacité d'un dispositif de filtration selon l'invention est supérieure à celle des dispositifs connus jusqu'ici.

De préférence, chaque couche est recouverte extérieurement d'une grille.

Avantageusement, la grille est plissée, ses plis ayant la forme des plis de la couche qu'elle recouvre.

De préférence, les grilles sont de même nature.

Avantageusement, les grilles sont réalisées en polypropylène.

De préférence, le dispositif comporte un cadre supportant l'ensemble constitué par les couches recouvertes par les grilles.

Avantageusement, le cadre est réalisé en polypropylène.

De préférence, le cadre est solidarisé à au moins une grille par soudage miroir.

En variante, les bords latéraux du cadre présentent une alvéole transversale dont la forme est adaptée à la section transversale de l'ensemble en sorte qu'elles reçoivent les extrémités transversales dudit ensemble.

En variante, le cadre est solidarisé à au moins une grille par surmoulage.

Pour mieux faire comprendre l'objet de l'invention, on va en décrire maintenant, à titre d'exemple, purement illustratif et non limitatif, un mode de réalisation représenté sur les dessins annexés.

Sur ces dessins :
- la figure 1 représente partiellement, en coupe, schématiquement un dispositif de filtration selon l'invention ;
- la figure 2 est une vue de face du dispositif de filtration de la figure 1 ;
- les figures 3 à 6 sont analogues à la figure 1 et correspondent chacune à une variante de dispositif de filtration selon l'invention.

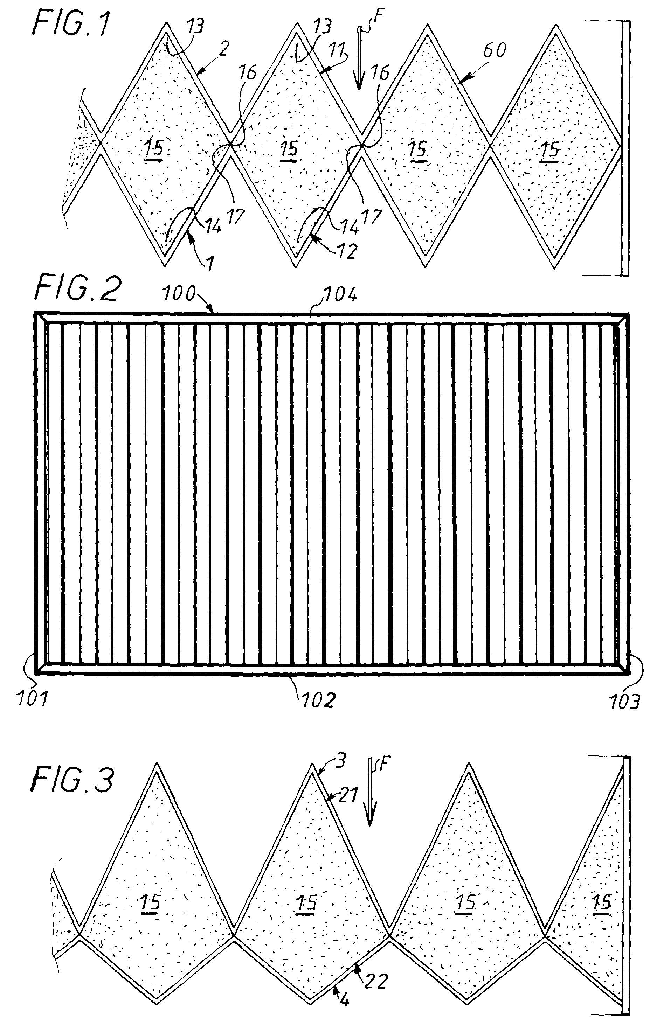

Le dispositif de filtration de la figure 1 comporte une grille souple 1 plissée contre laquelle est disposé, sans lui être solidarisé, un média filtrant 60.

Le média filtrant 60 comprend deux couches 11, 12 de non-tissé plissées ; les fonds 13 des plis de la première couche 11 sont chacun en regard d'un fond 14 des plis de la seconde couche 12 en sorte que sont constitués, entre les couches 11 et 12, des canaux 15 longitudinaux de grande taille avec une structure en nid d'abeille.

Plus précisément les fonds sont dirigés transversalement en sens inverse, ce qui permet d'obtenir transversalement la plus grande taille possible en ayant la plus grande capacité de remplissage possible.

Comme cela est visible sur la figure, les plis des deux couches 11 et 12 ont des hauteurs identiques et leurs pas de plissage sont égaux.

Ainsi, dans cette forme de réalisation, les deux couches 11 et 12 sont identiques mais simplement disposées comme expliqué ci-dessus et représenté.

La première couche 11 est également recouverte, sans y être fixée, d'une grille souple 2, dite d'entrée compte tenu du sens de la flèche F qui représente le sens de circulation de l'air dans le dispositif de filtration. Les grilles 1 et 2 plissées sont ici identiques et leurs plis épousent la forme des plis des couches 11 et 12.

Pour faciliter la lecture des dessins, les couches 11 et 12 et les grilles 1 et 2 sont représentées écartées les unes des autres mais bien entendu elles sont au contact les unes des autres, comme les sommets 16 des plis de la couche 11 qui sont pratiquement au contact des sommets 17 des plis de la couche 12.

On comprendra également que compte tenu de la symétrie parfaite du dispositif de filtration de la figure 1 il peut être placé dans un sens ou dans l'autre par rapport à la flèche F, la grille 1 ou la grille 2 pouvant indifféremment être la grille d'entrée ou de sortie.

L'ensemble constitué par le média filtrant 60 recouvert sur ses deux faces par les grilles 1 et 2 est maintenu par un cadre 100 qui l'entoure, figure 2, ici de forme rectangulaire.

Dans un premier temps, on ne réalise l'assemblage de l'ensemble que par trois côtés du cadre ; si la découpe de l'ensemble est telle que les canaux longitudinaux 15 s'étendent parallèlement aux petits côtés 101, 103 du cadre 100, dans ce premier temps, les trois côtés seront constitués par ces deux petits côtés 101, 103 s'étendant également longitudinalement et un grand côté transversal, par exemple le grand côté 102 ; dès lors l'entrée des canaux longitudinaux 15 sera libre et ceux-ci pourront recevoir tout matériau de filtration désiré.

Si le dispositif de filtration doit constituer un filtre à particules, on insérera, dans les canaux longitudinaux 15, des fibres.

De telles fibres sont choisies parmi le groupe des fibres thermoplastiques telles que les fibres de polypropylène, de polyéthylène, de polyester, de polycarbonate, de polyamide 6, de polyamide 6,6, le groupe des fibres acryliques, des fibres acryliques préoxydées, des fibres de carbone, le groupe des fibres para-aramide, le groupe des fibres méta-aramide, le groupe des fibres phénoliques, le groupe des fibres fluorocarbonées, le groupe des fibres minérales telles que les fibres de verre C,E,R, le groupe des fibres métalliques, le groupe des fibres naturelles telles que végétales, animales, cellulosiques.

Si le dispositif de filtration doit constituer un filtre combiné, c'est-à-dire arrêtant à la fois des particules et des gaz délétères, on insérera, dans les canaux longitudinaux 15, des poudres.

De telles poudres sont choisies parmi le groupe des thermoplastiques telles que les poudres de polypropylène, de polyéthylène, de polyester, de polycarbonate, de polyamide 6, de polyamide 6,6, d'acrylique, de modacrylique, de polyacrylique oxydé, d'aramide, de carbone, d'élastane, de phénol, de polyacrylate, de polyoxoamide, de polybenzimidazole, de polyether ethercétone, de polysulfure phénylène, de terre de diatomées, de silice, de zéolite, de métal, de charbon activé.

Comme on le voit, l'invention permet de réaliser, à partir d'un même ensemble de base, aussi bien un filtre à particules qu'un filtre combiné.

Bien entendu, après remplissage des canaux longitudinaux 15, on termine l'assemblage du cadre 100 en posant et en assemblant le grand côté 104.

Chaque couche 11, 12 est avantageusement constituée d'un mat de non-tissé formé d'un voile de carde en une nappe unique. Un tel voile de carde est par exemple tel que celui qui est décrit dans le document FR-A-2 761901. Le voile de carde isotrope ou anisotrope comprend des fibres de même nature ou un mélange de fibres différentes. De préférence, la longueur desdites fibres est comprise entre 5 et 120 millimètres, et leur diamètre au moins égal à 1 micromètre.

Pour réaliser un tel voile de carde isotrope, on procède par exemple comme suit.

Les fibres coupées à la longueur désirée sont introduites dans un mélangeur.

Le mélange de fibres obtenu est ensuite cardé au moyen d'une carde de type laine à double peigneur équipée d'un brouilleur de type pêle-mêle afin d'obtenir un voile de carde isotrope.

Le voile est, en sortie de carde, introduit dans un condenseur pour former une nappe.

Les paramètres de la carde et du condenseur sont choisis de manière à obtenir une nappe présentant une masse surfacique d'environ 20 à environ 150 g/m².

La nappe est déposée sur un tapis puis consolidée par une opération de liage hydraulique qui consiste à faire traverser la nappe disposée sur un tambour rotatif par des jets d'eau très fins sous haute pression (40 à 200 bars). En rebondissant sur le tambour, les jets d'eau provoquent un nouage des fibres conférant à la nappe une résistance mécanique importante sans pour autant en augmenter, de manière conséquente, la densité.

Après passage dans un tunnel de séchage, la nappe est enroulée. La nappe est ensuite reprise pour subir une opération de plissage et se trouve alors prête à être utilisée pour réaliser le dispositif de filtration comme indiqué ci-dessus.

De bons résultats ont été obtenus avec des fibres de polypropylène d'une finesse de 1,7 dtex, de diamètre 14 micromètres, coupées à une longueur de 40 millimètres.

D'autres fibres conviennent également ; ainsi, les fibres sont choisies dans le groupe des fibres thermoplastiques telles que les fibres de polypropylène, de polyéthylène, de polyester, de polycarbonate, de polyamide 6,6 le groupe des fibres acryliques, des fibres acryliques préoxydées, des fibres de carbone, le groupe des fibres para-aramide, le groupe des fibres méta-aramide, le groupe des fibres phénoliques, le groupe des fibres fluorocarbonées, le groupe des fibres minérales telles que les fibres de verre C,E,R, le groupe des fibres métalliques, le groupe des fibres naturelles telles que végétales, animales, cellulosiques.

Les deux grilles 1, 2 qui peuvent être de même nature ou de natures différentes sont avantageusement toutes deux en polypropylène.

Le cadre 100, prévu pour supporter l'ensemble des constituants du dispositif de filtration est avantageusement souple et réalisé par exemple en polypropylène, notamment en mousse de polypropylène ou en polypropylène alvéolaire. Il est solidarisé à la grille 1, ou à la grille 2, ou aux deux grilles 1 et 2.

La solidarisation d'une grille 1 ou 2 au cadre 100 s'effectue avantageusement par une opération dite de soudure miroir qui consiste à chauffer simultanément jusqu'au début de fusion une partie périphérique de la grille d'une part, et une portion du cadre correspondant à la zone de fixation d'autre part, puis à rapprocher et serrer l'une contre l'autre la partie périphérique et la portion précitées de manière à exercer une pression relative.

L'opération de soudure miroir est conduite de telle manière que l'extrémité latérale de la grille soit amenée à se plier à angle droit pour épouser la face interne correspondante du cadre, ce qui a pour avantages d'assurer une meilleure fixation de la grille et d'éviter toute fuite d'air entre grille et cadre.

Avantageusement, en final les quatre côtés de la grille et du cadre sont ainsi fixées entre eux.

La même nature chimique (polypropylène) de la grille et du cadre permet une fixation solide et durable.

Lors de l'opération de soudure miroir, le média filtrant 60 est apposé contre la ou les grilles 1 et/ou 2 correspondantes.

En variante, le cadre est moulé autour de la grille 1 ou 2 ou des deux grilles 1 et 2 ainsi que sur le média filtrant.

Selon une autre variante, les côtés du cadre 100 disposés transversalement par rapport aux canaux longitudinaux 15, ici les longs côtés 102 et 104, présentent sur leur face tournée vers l'intérieur une alvéole transversale dont la forme est adaptée à la section transversale de l'ensemble ; ces alvéoles reçoivent les extrémités transversales de l'ensemble ainsi retenu mécaniquement par rapport au cadre 100 ; bien entendu, les quatre côtés 101, 102, 103, 104 sont ensuite assemblés entre eux, par exemple par soudage.

A titre indicatif, la hauteur d'un tel dispositif de filtration est généralement comprise entre 10 et 60 millimètres, et est le plus souvent de 35 millimètres.

Les dimensions du cadre 100 sont de l'ordre de 200 x 150 millimètres ; bien entendu, pour une même efficacité du dispositif, ces dimensions sont à combiner à la hauteur du dispositif, celle-ci augmentant lorsque les dimensions du cadre diminuent.

La figure 3 montre une variante dans laquelle la première couche 21 et la grille d'entrée 3 ont des plis qui, par rapport à ceux de la seconde couche 22 et de la grille de sortie 4, ont un même pas mais une hauteur plus grande.

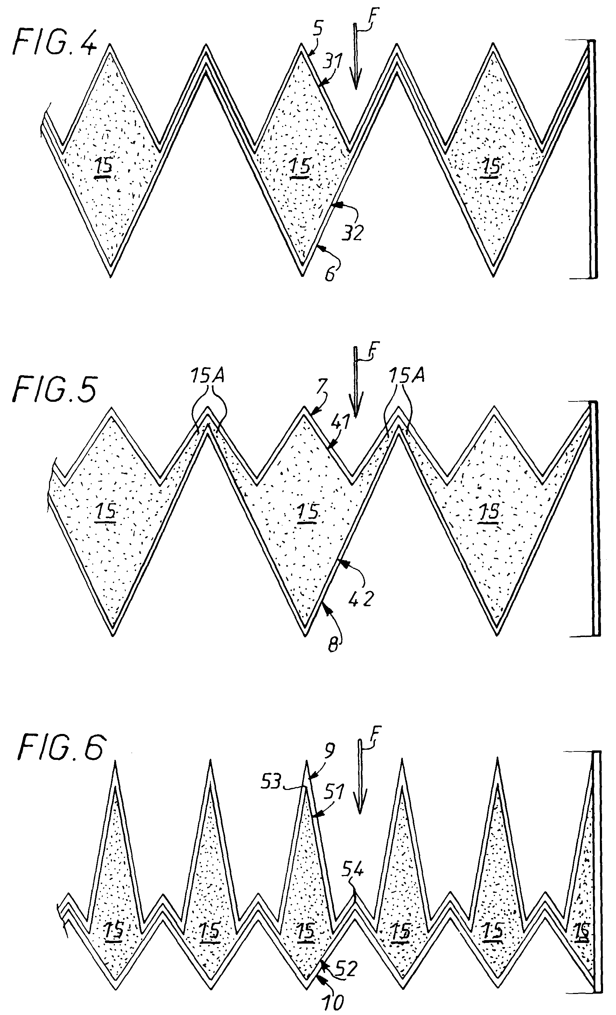

Selon la variante de la figure 4, les plis de chacune des couches 31 et 32 ont même hauteur mais la hauteur des plis de la première couche 31 ont une hauteur égale à la moitié de celle des plis de la seconde couche 32, tandis que le pas des plis de la première couche 31 est un multiple, ici le double, du pas des plis de la seconde couche 32 ; ainsi, dans la forme représentée, les canaux longitudinaux 15 ont une section en forme de losange.

La variante de la figure 5 est du genre de celle représentée à la figure 4 sauf qu'ici la hauteur des plis de la première couche 41 est inférieure à la moitié de celle des plis de la seconde couche 42 en sorte que les canaux longitudinaux 15 s'étendent latéralement dans des zones 15A où les plis des deux couches 41 et 42 ne se plaquent pas l'un sur l'autre comme à la figure 4.

Selon la variante de la figure 6, les plis de la première couche 51 sont constitués de rangées de plis imbriquées, ici deux rangées, les hauteurs des plis des deux rangées étant différentes comme montré en 53 et 54 respectivement ; les plis de la seconde couche 52 ont même hauteur, laquelle est avantageusement comprise entre les hauteurs des plis des deux rangées de la première couche 51 ; ici, les plis des deux couches 51 et 52 ont même pas.

Bien entendu, aux figures 4 à 6, les grilles épousent la forme de la couche sur laquelle elles sont appliquées ; ainsi, à la figure 4, la grille d'entrée 5 a la forme de la première couche 31 et la grille de sortie 6 celle de la seconde couche 32 ; à la figure 5, la grille d'entrée 7 a la forme de la première couche 41 et la grille de sortie 8 celle de la seconde couche 42 ; à la figure 6, la grille d'entrée 9 a la forme de la première couche 51 et la grille de sortie 10 celle de la seconde couche 52.

## Revendications

1. Dispositif de filtration destiné notamment à l'épuration de l'air pour l'aération et/ou le chauffage et/ou la climatisation de locaux ou d'habitacles de véhicules automobiles, comportant deux couches de non-tissé plissées, caractérisé par le fait que les fonds des plis d'une couche (11-51) sont disposés en regard d'au moins un fond défini par les plis de l'autre couche (12-52) en sorte que sont constitués des canaux (15) longitudinaux.

2. Dispositif de filtration selon la revendication 1, caractérisé par le fait que les plis d'une même couche (11,12) ont même hauteur et les plis des deux couches (11,12) ont même pas et même hauteur.

3. Dispositif de filtration selon la revendication 1, caractérisé par le fait que les plis d'une même couche (21 ,22) ont même hauteur et les plis des deux couches (21,22) ont même pas et des hauteurs différentes.

4. Dispositif de filtration selon la revendication 1, caractérisé par le fait que les plis d'une même couche (31,32) ont même hauteur et les plis des deux couches (31,32) ont des pas multiples l'un de l'autre et la hauteur des plis de l'une (31) est la moitié de celle des plis de l'autre (32).

5. Dispositif de filtration selon la revendication 1, caractérisé par le fait que les plis d'une même couche (41,42) ont même hauteur et les plis des deux couches (41,42) ont des pas multiples l'un de l'autre et la hauteur des plis de l'une (41) est inférieure à la moitié de celle des plis de l'autre (42).

6. Dispositif de filtration selon la revendication 1, caractérisé par le fait que les plis de la première couche (51) sont constitués de rangées de plis imbriquées de hauteurs différentes (53,54), les plis de la seconde couche (52) ont même hauteur, de préférence comprise entre les hauteurs (53,54) des plis des rangées imbriquées de la première couche (51), et les plis des deux couches (51,52) ont même pas.

7. Dispositif de filtration selon l'une des revendications l à 6, caractérisé par le fait que la première couche (11-51) de non-tissé et/ou la seconde couche (12-52) de non-tissé est/sont formée(s) d'un voile de carde isotrope ou anisotrope comprenant des fibres de même nature ou un mélange de fibres différentes.

8. Dispositif de filtration selon la revendication 7, caractérisé par le fait que ledit voile est en une seule couche.

9. Dispositif de filtration selon l'une des revendications 7 ou 8, caractérisé par le fait que la longueur desdites fibres est au moins égale à 5 mm.

10. Dispositif de filtration selon l'une des revendications 7 à 9, caractérisé en ce que la longueur desdites fibres est au plus égale à 120 mm.

11. Dispositif de filtration selon l'une des revendications 7 à 10, caractérisé par le fait que le diamètre moyen desdites fibres est au moins égal à 1 µm.

12. Dispositif de filtration selon l'une des revendications 7 à 11, caractérisé par le fait que lesdites fibres sont choisies parmi le groupe des fibres thermoplastiques telles que les fibres de polypropylène, de polyéthylène, de polyester, de polycarbonate, de polyamide 6,6, le groupe des fibres acryliques, des fibres acryliques préoxydées, des fibres de carbone, le groupe des fibres para-aramide, le groupe des fibres méta-aramide, le groupe des fibres phénoliques, le groupe des fibres fluorocarbonées, le groupe des fibres minérales telles que les fibres de verre C,E,R,, le groupe des fibres métalliques, le groupe des fibres naturelles telles que végétales, animales, cellulosiques.

13. Dispositif de filtration selon l'une des revendications 1 à 12, caractérisé par le fait que des fibres dites d'insertion sont insérées dans les canaux longitudinaux.

14. Dispositif de filtration selon la revendication 13, caractérisé par le fait que les fibres d'insertion sont choisies parmi le groupe des fibres thermoplastiques telles que les fibres de polypropylène, de polyéthylène, de polyester, de polycarbonate, de polyamide 6, de polyamide 6,6, le groupe des fibres acryliques, des fibres acryliques préoxydées, des fibres de carbone, le groupe des fibres para-aramide, le groupe des fibres méta-aramide, le groupe des fibres phénoliques, le groupe des fibres fluorocarbonées, le groupe des fibres minérales telles que les fibres de verre C,E,R, le groupe des fibres métalliques, le groupe des fibres naturelles telles que végétales, animales, cellulosiques.

15. Dispositif de filtration selon l'une des revendications 1 à 12, caractérisé par le fait qu'une poudre (ou un mélange de poudres) dite(s) d'insertion est (sont) insérée(s) dans les canaux longitudinaux.

16. Dispositif de filtration selon la revendication 15, caractérisé par le fait que les poudres d'insertion sont choisies parmi le groupe des thermoplastiques telles que les poudres de polypropylène, de polyéthylène, de polyester, de polycarbonate, de polyamide 6, de polyamide 6,6, d'acrylique, de modacrylique, de polyacrylique oxydé, d'aramide, de carbone, d'élastane, de phénol, de polyacrylate, de polyoxoamide, de polybenzimidazole, de polyether ethercétone, de polysulfure phénylène, de terre de diatomées, de silice, de zéolite, de métal, de charbon activé.

17. Dispositif de filtration selon l'une des revendications 1 à 16, caractérisé par le fait que chaque couche (11-51, 12-52) est recouverte extérieurement d'une grille (1-10).

18. Dispositif de filtration selon la revendication 17, caractérisé par le fait que la grille (1-10) est plissée, ses plis ayant la forme des plis de la couche (11-51, 12-52) qu'elle recouvre.

19. Dispositif de filtration selon l'une des revendications 17 ou 18, caractérisé par le fait que les grilles (1-10) sont de même nature.

20. Dispositif de filtration selon la revendication 19, caractérisé par le fait que les grilles (1-10) sont réalisées en polypropylène.

21. Dispositif de filtration selon l'une des revendications 17 à 20, caractérisé par le fait qu'il comporte un cadre (100) supportant l'ensemble constitué par les couches (11-51, 15-52)recouvertes par les grilles (1-10).

22. Dispositif de filtration selon la revendication 21, caractérisé par le fait que le cadre (100) est réalisé en polypropylène.

23. Dispositif de filtration selon l'une des revendications 21 ou 22, caractérisé par le fait que le cadre (100) est solidarisé à au moins une grille (1-10) par soudage miroir.

24. Dispositif de filtration selon l'une des revendications 21 ou 22, caractérisé par le fait que les bords latéraux (104, 105) du cadre (100) présentent une alvéole transversale dont la forme est adaptée à la section transversale de l'ensemble en sorte qu'elles reçoivent les extrémités transversales dudit ensemble.

25. Dispositif de filtration selon l'une des revendications 21 ou 22, caractérisé par le fait que le cadre (100) est solidarisé à au moins une grille (1-10) par surmoulage.
